# NEUE EUROPÄISCHE PATENTSCHRIFT

(11) **EP 1 981 826 B2**
(45) Veröffentlichungstag und Bekanntmachung des Hinweises auf die Entscheidung über den Einspruch: **24.07.2019**
(45) Hinweis auf die Patenterteilung: 25.01.2012
(21) Anmeldenummer: 06806630.7
(22) Anmeldetag: 31.10.2006
(51) Int. Cl.: C04B 20/10, C04B 28/04

(54) **BAUPLATTE**
CONSTRUCTION PANEL
DALLE DE CONSTRUCTION

(30) Priorität: 09.02.2006 DE 102006005899
(43) Veröffentlichungstag der Anmeldung: 22.10.2008
(73) Patentinhaber: KNAUF AQUAPANEL GmbH, 44147 Dortmund (DE)
(72) Erfinder: KOSLOWSKI, Thomas, 44227 Dortmund (DE)
(74) Vertreter: Berkenbrink, Kai-Oliver
(86) Internationale Anmeldenummer: PCT/EP2006/010459
(87) Internationale Veröffentlichungsnummer: WO 2007/090445

(56) Entgegenhaltungen:
- EP-A- 0 282 240
- EP-A- 1 367 189
- EP-A1- 0 681 998
- EP-B1- 0 829 459
- WO-A-03/022776
- WO-A1-02/31287
- DD-A1- 233 996
- DE-A1- 2 930 483
- DE-A1- 3 115 758
- DE-A1- 3 420 462
- DE-A1- 3 731 993
- DE-A1- 19 804 325
- DE-A1-102004 002 560
- DE-B- 1 221 387
- DE-C- 541 439
- DE-T2- 60 131 748
- DE-T2-602004 010 235
- DE-U1- 20 023 609
- FR-A- 1 524 312
- US-A- 3 284 980
- Auszug Zementtasschenbuch; Kapitel 'Zementarten' , S.19-26, 149-150
- Auszug Zementtaschenbuch
- HeidelbergCement, Betontechnische Daten: "Leichte Gesteinskörnungen", , Retrieved from the Internet: URL:www.beton-technische-daten.de/2/2_6.b. pdf
- "Betonzusätze Zusatzmittel und Zusatzstoffe", Zement-Merkblatt Betontechnik, vol. B3, September 2005 (2005-09),
- 'Anlage 1' mit Versuchen zur Unterscheidbarkeit von Massehydrophobierung und Vorhydrophobierung ausgewählter Bestandteile
- Anlage PI-1 & Anlage PI-2
- WINKLER, A.: "Herstellung von Mörteln mit Recyclingmaterialien und Entwicklung von Rezepturen für Ferigmortel", & Fraunfofer Baufachinformationen; 'Bücher, Broschüren' & Anlage zu D19
- 'SILRES BS 1042' Techn. Datenblatt, Überarbeitungsdatum 07.06.2013

## Beschreibung

Die Erfindung betrifft eine Bauplatte, insbesondere zur Verwendung im Trockenbau.

Solche Bauplatten sind insbesondere auch in Form so genannter Zementbauplatten bekannt. Zementbauplatten sind mittels eines Bindemittels auf Basis von Zement erstellt.

Zur Verbesserung der Dämmeigenschaften und zur Verringerung des Gewichtes solcher Bauplatten ist es bekannt, der Bindemittelmischung ein poröses Schüttgut, insbesondere in Form von Blähton, Blähschiefer, Blähglas oder Bims zuzufügen.

Nachteilig ist zum einen die verhältnismäßig hohe Dichte dieser Komponenten, die üblicherweise im Bereich von 350 bis 700 kg/m³ liegt. Hierdurch ist die Dichte beziehungsweise das Gewicht der Bauplatte nur begrenzt reduzierbar. Auch die Dämmeigenschaften von Bauplatten, die unter Zuhilfenahme der vorgenannten, porösen Schüttgüter erstellt sind, sind verbesserungswürdig.

Nachteilig bei der Verwendung der vorgenannte Schüttgüter ist jedoch insbesondere auch, dass sie international nur bedingt verfügbar sind, weshalb sie unter hohem logistischen Aufwand zumeist erst an den Ort der Bauplattenerstellung transportiert werden müssen.

Eine hervorragende Alternative für die vorgenannten, porösen Schüttgüter würde expandierter Perlit darstellen, da dieser Stoff eine äußerst geringe Dichte aufweist (Trockenrohdichte (Schüttgewicht) nur etwa 70 kg/m³) und die Dämmeigenschaften einer unter Verwendung von expandiertem Perlit erstellten Bauplatte daher nachhaltig verbessert werden könnten. Vorteilhaft an Perlit ist jedoch insbesondere auch, dass er einen Blähfaktor von etwa 10 bis 15 aufweist, sich also beim Expandieren von Rohperlit zu expandiertem Perlit um den vorgenannten Faktor aufbläht. Aufgrund ihrer geringen Raumeinnahme kann Rohperlie daher mit geringem logistischen Aufwand an den Verwendungsort transportiert und erst dort expandiert werden.

Es hat in der Praxis daher nicht an Versuchen gefehlt, expandierten Perlit für den Einsatz in Bauplatten zu verwenden. Ein solcher Einsatz von Perlit scheiterte bisher insbesondere an der hohen Saugfähigkeit von expandiertem Perlit, die dazu führte, dass der expandiert Perlit Wasser oder sonstige feuchte Bestandteile der feuchten Bindemittelmischung aufsaugte. Die Restfeuchte dieser Bauplatten lag häufig deutlich über 50 %. Dies verursachte erhebliche Probleme insbesondere beim Trocknen (häufig war eine ausreichende Trocknung überhaupt nicht erreichbar; im übrigen war eine Trocknung auf die gewünschte Restfeuchte in vertretbaren Zeiträumen nur unter Zuhilfenahme von Trocknungsanlagen erreichbar, was mit erheblichen Kosten verbunden war).

WO 03/022776 A1 offenbart eine zementartige Mischung, die Portlandzement, hydrophobierten expandierten Perlit und ein Gas erzeugendes Zusatzmittel enthalten kann. Der in EP 0 282 240 A1 beschriebene Versatz, der hydrophobierten expandierten Perlit als Zuschlag enthalten kann, nennt als in Frage kommende Bindemittel Monoaluminiumdihydrogenphosphat, monoalkalisches Erdmetalldihydrogenphosphat und Mischungen daraus. DE 198 04 325 A1 beschreibt eine monolithische Bauplatte auf Zementbasis mit einem Leichtzuschlag aus Perlit, deren Kernschicht massenhydrophobiert sein kann und die auf ihren Hauptoberflächen Deckschichten auf Zementbasis mit integriertem Armierungsgewebe aufweist. In DE 31 15 758 A1 wird ein Formkörper aus geblähtem hyrophobiertem Mineral offenbart, der mit einem Bindesystem bestehend entweder aus Calciumaluminat und Aluminiumphosphat oder aus Wasserglas und einem Katalysator gebunden ist.

Der Erfindung liegt die Aufgabe zu Grunde, eine Bauplatte zur Verfügung zu stellen, die unter Verwendung von expandiertem Perlit erstellt ist, wobei die vorgenannten Probleme nicht auftreten.

Diese Aufgabe wird gelöst durch eine Bauplatte gemäß Anspruch 1.

Ein zentraler Erfindungsgedanke liegt darin, unmittelbar auf den expandierten Perlit eine Hydrophobierung aufzubringen. Ein Eindringen von Wasser, insbesondere Anmachwasser der Bindemittelmischung, oder sonstiger Flüssigkeit in die Körner aus expandiertem Perlit ist dadurch wirksam verhindert.

Aus dem Stand der Technik ist die Massehydrophobierung von Bindemittelmischungen bekannt, beispielsweise aus EP 0 829 459 B1, um hierdurch ein Eindringen von Feuchtigkeit aus der Bindemittelmischung in saugfähige Komponenten der Bindemittelmischung zu reduzieren. Durch eine Massehydrohphobierung kann ein Eindringen von Feuchtigkeit, insbesondere von Anmachwasser der Bindemittelmischung, in expandierten Perlit jedoch nicht in ausreichendem Umfang verhindert werden.

Die Restfeuchte der anmeldungsgemäßen Bauplatte kann, ohne eine weitere Trocknung der Platte, beispielsweise zwischen 10 und 20 Masse-%, bezogen auf das Gesamtgewicht der Bauplatte, liegen.

Aus Versuchen mit unter Verwendung von expandiertem Perlit erstellten Bauplatten ist das Problem bekannt, dass die Trockenrohdichte der Bauplatte durch den expandierten Perlit teilweise so weit abnimmt, dass die Bauplatte für zahlreiche praktische Anwendungen "zu leicht" ist. Eine solche zu leichte Bauplatte weist die erforderlichen physikalischen Festigkeiten nicht mehr auf. Auch sind diese zu leichten Bauplatten anfällig gegen Windabriss an Gebäudeaußenseiten.

Ferner wurde bei entsprechenden Bauplatten festgestellt, dass es beim Abbinden des Bindemittels teilweise zu einem erheblichen Schwinden und daraus resultierenden Schwindungsrissen in der Bauplatte kam.

Zur Lösung der vorgenannten Probleme liegt ein weiterer zentraler Erfindungsgedanke darin, in der Bindemittelmischung neben der Komponente der expandierten Perlitekörnung eine Komponente in Form eines inerten Füllstoffs vorzusehen.

Zum einen kann durch diesen inerten Füllstoff, der eine Trockenrohdichte aufweist, die höher ist als die Trockenrohdichte des hydrophobierten expandierten Perlit, die mittlere Dichte beziehungsweise das (Flächen-) Gewicht der Bauplatte individuell eingestellt beziehungsweise erhöht werden. Wird beispielsweise ein verhältnismäßig hoher Anteil an expandiertem Perlit eingesetzt (wodurch die Dichte der Bauplatte erheblich reduziert und deren Dämmeigenschaften verbessert werden), kann gleichzeitig auch ein relativ höherer Anteil an inertem Füllstoff eingesetzt werden, wodurch die Dichte der Bauplatte auf einen gewünschten Wert angehoben werden kann. Entsprechend kann in Abhängigkeit von der gewünschten Dichte beziehungsweise dem gewünschten (Flächen-)Gewicht der Bauplatte, sowie in Abhängigkeit von den gewünschten Dämmeigenschaften der Bauplatte und dem daraus jeweils resultierenden Anteil an expandiertem Perlit in der Bauplatte die Menge an inertem Füllstoff in der Bauplatte variiert und eingestellt werden.

Zum anderen kann durch den Füllstoff jedoch insbesondere auch ein übermäßiges Schwinden beim Abbinden des Bindemittels verhindert werden. Dies ist insbesondere darauf zurückzuführen, dass der Füllstoff aufgrund seiner inerten Eigenschaften keiner Schwindung unterliegt. Erfindungsgemäß wurde festgestellt, dass der inerte Füllstoff besonders schwindungsfest ist, wenn der Anteil an Poren unter 0,1 µm in dem inerten Füllstoff unter 3 % (bezogen auf das Gesamtporenvolumen des inerten Füllstoffs) liegt.

Erfindungsgemäß wurde ferner festgestellt, dass die Festigkeit einer anmeldungsgemäßen Bauplatte durch eine vermehrte Zugabe von inertem Füllstoff erhöht werden kann. Dies ist offenbar auf die unter Einsatz von inertem Füllstoff stark verbesserten Schwindungseigenschaften der Bindemittelmischung zurückzuführen. Sinkt die Festigkeit der Bauplatte bei einem erhöhten Anteil an expandiertem Perlit daher ab, kann verstärkt inerter Füllstoff zugegeben werden, um die Festigkeit wieder anzuheben.

Die anmeldungsgemäße Bauplatte kann grundsätzlich auf Basis eines beliebigen anorganischen Bindemittels erstellt sein. Bevorzugt kann ein Bindemittel in Form von Zement, besonders bevorzugt Portlandzement, zum Beispiel CEM I 32,5 R, CEM I 42,5 R oder CEM I 52,5 R, verwendet sein.

Das abgebundene Bindemittel bildet eine Matrix aus, in die eine oder weitere Komponenten der Bindemittelmischung, aus denen die anmeldungsgemäße Bauplatte erstellt ist, eingebettet sind.

Eine der weiteren Komponenten sind die Körner aus expandiertem Perlit. Diese Körner aus expandiertem Perlit können beispielsweise eine Korngröße im Bereich von größer 0 mm bis 6 mm aufweisen. Besonders bevorzugt liegt der expandierte Perlit in einer Korngröße im Bereich von 0,1 mm bis 3 mm vor. Die Körner aus expandiertem Perlit können beispielsweise auch in einer Korngröße im Bereich von 0,1 mm bis 6 mm, von 0,5 mm bis 6 mm, von 1 mm bis 6 mm, von 0,5 mm bis 3 mm, oder von 1 mm bis 3 mm vorliegen.

Bevorzugt weisen die größten Körner aus expandiertem Perlit eine Korngröße auf, die kleiner ist als ein Drittel der Bauplattendicke.

Die Trockenrohdichte (Schüttgewicht) des zur erfindungsgemäßen Vorhydrophobierung verwendeten, expandierten Perlit (ohne aufgebrachte Hydrophobierung) kann im Bereich von 40 bis 100 kg/m³ liegen, also beispielsweise bei 60 bis 80 kg/m³. Die Trockenrohdichte des hydrophobierten Perlit kann beispielsweise im Bereich von 50 bis 150 kg/m³ liegen, also beispielsweise auch im Bereich von 70 bis 100 kg/m³.

Erfindungsgemäß ist auf die Körner aus expandiertem Perlit eine Hydrophobierung in Form von Silikonöl aufgebracht. Die Hydrophobierung kann bevorzugt in flüssiger Form, beispielsweise in Form einer wässrigen Emulsion, zum Beispiel in Form einer wässrigen Emulsion eines Polydimethylsiloxans aufgebracht werden.

Die entsprechend bereits vorhydrophobierten Körner aus expandiertem Perlit werden anschließend in die Bindemittelmischung eingebracht.

Erfindungsgemäß vorhydrophobierte Körner aus Perlit können insbesondere dadurch gekennzeichnet sein, dass sie mit einer hydrophobierten "Außenhaut" in der Bindemittelmatrix vorliegen, wobei gleichzeitig in das Innere der Körner keine Bestandteile der Bindemittelmischung, insbesondere keine flüssigen Bestandteile, eingedrungen sind.

Ergänzend kann vorgesehen sein, dass die Bindemittelmischung zusätzlich massehydrophobiert ist. Dabei kann die Bindemittelmischung beispielsweise durch Wachs, Silikon oder durch ein Natrium-Oleat hydrophobiert sein. Durch die Massehydrophobierung der Bindemittelmischung ist die abgebundene Bindemittelmischung und damit die Bauplatte wirksam gegen ein Eindringen von Feuchtigkeit geschützt.

Als weitere Komponente enthält die Bindemittelmischung, aus der die anmeldungsgemäße Bauplatte erstellt ist, inerten Füllstoff. Erfindungsgemäß ist ein inerter Füllstoff in Form von Kalksteinmehl eingesetzt.

Ein "inerter" Füllstoff ist anmeldungsgemäß vorgesehen, um das Abbindeverhalten des Bindemittels beziehungsweise der Bindemittelmischung nicht nachteilig zu beeinflussen beziehungsweise dieses sogar verbessern zu können. So verbessert der inerte Füllstoff, wie oben dargestellt, die Schwindungseigenschaften der Bindemittelmischung.

Was unter einem "inerten" Füllstoff verstanden wird, ist dem Fachmann auf dem Gebiet der Bindemittel hinlänglich bekannt, so dass auf eine weitergehende Definition hier verzichtet werden kann. Insbesondere ist hierdurch bekanntermaßen zum Ausdruck gebracht, dass ein Füllstoff keine hydraulischen oder latent hydraulischen Eigenschaften aufweist oder dass der Füllstoff keine maßgeblichen chemischen Reaktionen in der Bindemittelmischung zeigt.

Die Trockenrohdichte (Schüttgewicht) des inerten Füllstoffes kann zum Beispiel im Bereich von 150 bis 1500 kg/m³ liegen, also beispielsweise auch im Bereich von 300 bis 1000 kg/m³ oder von 350 bis 800 kg/m³.

Neben Bindemittel, hydrophobiertem expandiertem Perlit und gegebenenfalls inertem Füllstoff kann die Bindemittelmischung beziehungsweise die daraus erstellte anmeldungsgemäße Bauplatte eine oder mehrere weitere Komponenten enthalten. Beispielsweise kann die Bindemittelmischung zusätzliche Anteile an einem puzzolanisch oder latent hydraulischen Stoff, wie beispielsweise Flugasche enthalten.

Die Bauplatte weist auf beiden Hauptoberflächen (also den beiden großen Flächen der Bauplatte) Deckschichten auf. Eine solche Deckschicht besteht aus einem abgebundenen anorganischen Bindemittel, einem Bindemittelschlicker. In diesem Bindemittel ist eine Armierung in Form einer Fasermatte eingebettet.

Diese Deckschichten decken den "Kern" der Bauplatte, der wie oben beschrieben ausgeführt ist, nach außen hin ab. Das Bindemittel der Deckschichten besteht dabei aus dem gleichen Bindemittel wie der "Kern" der Bauplatte, also aus einem Portlandzement.

Die Fasermatte ist bevorzugt aus vor Alkaliätzung geschützten Glasfasern (Coatings) oder alkaliresistenten Glasfasern erstellt. Die Fasermatte kann insbesondere auch allein in Rand- beziehungsweise Kantenbereichen der Bauplatte vorgesehen sein, um die Kanten zu festigen.

Durch die Deckschichten können insbesondere die Außenseiten der Bauplatte vorteilhaft gestaltet werden. So kann der Bauplatte mittels einer aus einem Bindemittelschlicker erstellten Deckschicht eine optisch ansprechende, glatte Oberfläche verliehen werden.

Das Bindemittel der Deckschichten kann massehydrophobiert sein, beispielsweise durch Wachs, Silikon oder durch ein Natrium-Oleat. Durch die Massehydrophobierung der Deckschichten ist die Bauplatte besonders wirksam gegen ein Eindringen von Feuchtigkeit geschützt.

Bei einer unter Verwendung von inertem Füllstoff erstellten anmeldungsgemäßen Bauplatte liegen die Komponenten im Bereich der folgenden Massenanteile (bezogen auf die Gesamtmasse der Bauplatte):
- Bindemittel im Bereich von 10 bis 40 Masse-%, also beispielsweise auch im Bereich von 15 bis 35 Masse-% oder im Bereich von 20 bis 30 Masse-%;
- Hydrophobierter expandierter Perlit im Bereich von 3 bis 30 Masse-%, also beispielsweise auch im Bereich von 5 bis 20 oder im Bereich von 5 bis 15 Masse-%;
- Inerter Füllstoff im Bereich von 10 bis 70 Masse-%, also beispielsweise auch im Bereich von 20 bis 60 Masse-%, im Bereich von 30 bis 60 Masse-% oder im Bereich von 40 bis 60 Masse-%;
- gegebenenfalls Wasser (Restfeuchte) im Bereich von 0 bis 20 Masse-%, also beispielsweise auch im Bereich von 5 bis 20 Masse-% oder im Bereich von 10 bis 15 Masse-%;
- gegebenenfalls weitere Komponenten im Bereich von 0 bis 20 Masse-%, also beispielsweise auch im Bereich von 2 bis 15 Masse-%.

Während bisher gattungsgemäße Bauplatten in einem Dichtebereich von etwa 1.000 bis 1.200 kg/m³ herstellbar waren, lässt sich die anmeldungsgemäße Bauplatte beispielsweise in einem Dichtebereich von 300 bis 1.200 kg/m³ konfektionieren. Bevorzugt weist die Bauplatte eine Dichte im Bereich von 350 bis 1.000 kg/m³, also beispielsweise auch im Bereich von 400 bis 900 kg/m³ oder von 500 bis 800 kg/m³ auf.

Die vorstehenden sowie die sonstigen Dichte- und Gewichtsangaben in dieser Anmeldung verstehen sich als Angaben bezogen auf die Trockenrohdichte des Produktes.

Bei Bauplatten spielt häufig auch das Flächengewicht eine wichtige Rolle. Bei einer Dicke einer anmeldungsgemäßen Bauplatte im Bereich von 10 bis 15 mm, also beispielsweise bei einer Dicke von 12,5 mm, lassen sich beispielsweise anmeldungsgemäße Bauplatte mit einem Gewicht pro Fläche im Bereich von 4 bis 15 kg/m² konfektionieren, also beispielsweise auch in einem Bereich von 5 bis 13 kg/m², von 5 bis 12 kg/m² oder von 6 bis 10 kg/m².

Eine beispielhafte Zusammensetzung einer anmeldungsgemäßen Bauplatte lautet wie folgt:
- Portlandzement: 24,1 Masse-%
- Expandierter hydrophobierter Perlit (Hydrophobierung in Form von Silikonöl; Korngröße Perlite 0,1 - 3 mm): 9,8 Masse-%
- Kalksteinmehl: 49,5 Masse-%
- Restfeuchte: 16,6 Masse-%.

Eine beispielhafte Zusammensetzung einer auf die anmeldungsgemäße Bauplatte aufzubringenden Deckschicht lautet beispielsweise wie folgt:
- Portlandzement: 20,0 Masse-%
- Kalksteinmehl: 60,0 Masse-%
- Glasfasermatte: 7,7 Masse-%
- Restfeuchte: 12,3 Masse-%.

Eine beispielhafte Zusammensetzung einer anmeldungsgemäßen Bauplatte, die auf ihren beiden Hauptoberflächen mit je einer Deckschicht versehen ist, lautet beispielsweise wie folgt:
- Portlandzement: 23,3 Masse-%
- Expandierter hydrophobierter Perlit (Hydrophobierung in Form von Silikonöl; Korngröße Perlite 0,1 - 3 mm): 10,0 Masse-%
- Kalksteinmehl: 52,4 Masse-%
- Glasfasermatte: 1,3 Masse-%
- Restfeuchte: 13 Masse-%.

Die anmeldungsgemäße Bauplatte kann beispielsweise eine Dicke im Bereich von 10 bis 15 mm aufweisen, beispielsweise eine Dicke von 12,5 mm.

Die Deckschichten können beispielsweise jeweils eine Dicke im Bereich von 0,5 bis 3 mm aufweisen, beispielsweise also auch eine Dicke von 1 mm. Eine also 12,5 mm dicke Platte kann mithin beispielsweise einen "Kern" in einer Dicke von 10,5 mm aufweisen, der auf seinen beiden Hauptoberflächen je eine Deckschicht mit einer Dicke von jeweils 1 mm aufweist.

Die anmeldungsgemäße Bauplatte ist insbesondere zur Verwendung im Trockenbau geeignet, zum Beispiel als Wand- oder Bodenplatte, insbesondere beispielsweise auch als Putzträgerplatte.

Sämtliche der vorgenannten Merkmale der anmeldungsgemäßen Bauplatte können einzeln oder in Kombination beliebig miteinander kombiniert werden.

Ein Ausführungsbeispiel einer anmeldungsgemäßen Bauplatte wird anhand der nachfolgenden Figurenbeschreibung näher erläutert.

Dabei zeigt, stark schematisiert,

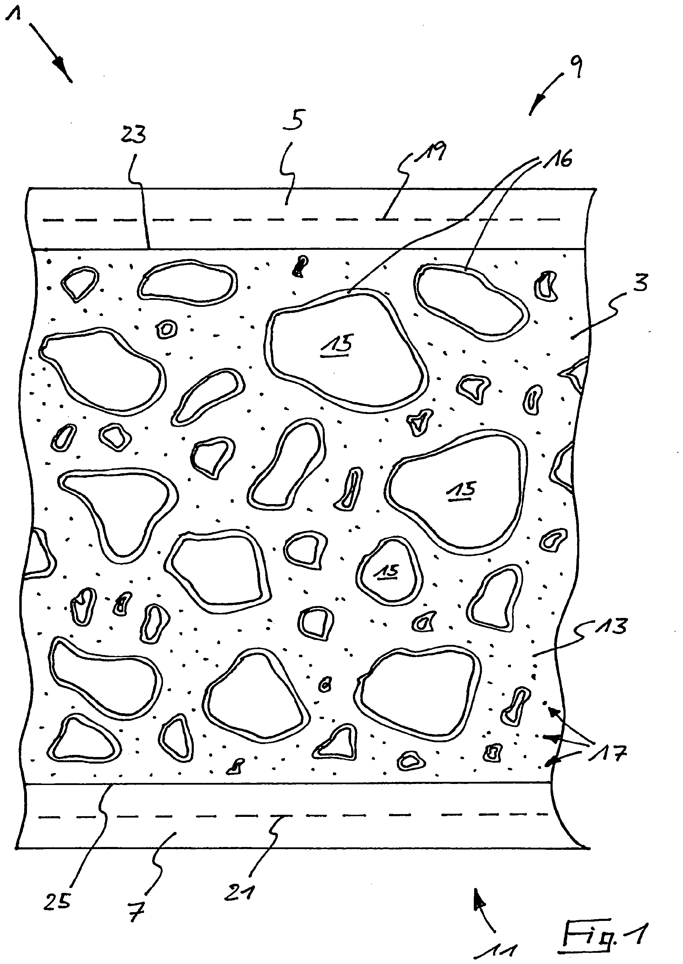

- Figur 1: einen Ausschnitt aus einem Querschnitt durch eine anmeldungsgemäße Bauplatte in seitlicher Schnittansicht.

In Figur 1 ist ein Schnitt durch eine Bauplatte 1 dargestellt, die aufgebaut ist aus einem Kern 3, auf dessen eine Hauptoberflächen 9 (hier die obere) sowie die zweite Hauptoberfläche 11 (hier die untere) je eine Deckschicht 5 (oben) und eine Deckschicht 7 (unten) aufgebracht ist.

Der Kern 3 der Bauplatte 1 ist erstellt aus einer Bindemittelmischung, die aus Portlandzement, mit Silikonöl hydrophobiertem expandiertem Perlit und Kalksteinmehl zusammengesetzt ist. Ferner ist der Kern 3 der Bauplatte 1 mittels Natrium-Oleat massehydrophobiert.

In dem Kern 3 der Bauplatte 1 bildet der abgebundene Portlandzement eine Matrix 13, in die die Körner aus hydrophobiertem expandiertem Perlit 15 sowie das Kalksteinmehl 17 als inerter Füllstoff eingebettet sind.

Der Kern 3 der Bauplatte 1 weist hier eine Dicke von 10,5 mm auf.

Wie in Figur 1 dargestellt, weisen die Körner aus hydrophobiertem expandiertem Perlit 15 jeweils eine Außenhaut 16 aus Hydrophobiermittel auf, die ein Eindringen von Flüssigkeit in die Körner aus Perlit 15 verhindert.

Entlang ihrer beiden Hauptoberflächen 9 und 11 weist die Bauplatte 1 je eine Deckschicht 5, 7 auf, die den Kern 3 nach außen jeweils vollständig abdecken.

Die Deckschichten 5, 7 sind je 1 mm dick und sind erstellt aus Portlandzement, in dem jeweils eine Glasfasermatte 19, 21 eingebettet ist. Die Deckschichten 5, 7 sind durch eine Silikonöl-Emulsion massehydrophobiert.

Im Ausführungsbeispiel sind die "Grenzen" 23, 25 zwischen den Deckschichten 5, 7 und dem Kern 3 der Anschaulichkeit halber als scharfe Trennlinie angegeben. In der praktischen Ausführung können die Deckschichten jedoch auch "fließend" in den Kern übergehen, so dass eine scharfe Grenzlinie nicht immer auszumachen ist.

## Patentansprüche

1. Bauplatte (1), insbesondere zur Verwendung im Trockenbau, mit folgenden Merkmalen:
1. einem Kern (3) mit folgenden Merkmalen:
1.1 einer Matrix (13) aus einem abgebundenen, anorganischen Bindemittel in Form von Portlandzement;
1.2 in die Bindemittelmatrix (13) sind Körner aus expandiertem Perlit (15) eingebettet;
1.3 auf die Körner aus expandiertem Perlit (15) ist eine Hydrophobierung (16) in Form von Silikonöl aufgebracht;
1.4 in die Bindemittelmatrix (13) ist ein inerter Füllstoff (17) in Form von Kalksteinmehl eingebettet;
1.5 der inerte Füllstoff (17) weist eine Trockenrohdichte auf, die höher ist als die Trockenrohdichte des hydrophobierten expandierten Perlits (15);
2. zwei Deckschichten (5, 7) mit folgenden Merkmalen:
2.1 die Deckschichten (5, 7) decken den Kern (3) nach außen hin ab und bilden die beiden Hauptoberflächen (9, 11) der Bauplatte (1);
2.2 die Deckschichten (5, 7) bestehen aus einem abgebundenen Portlandzementschlicker;
2.3 in die Deckschichten (5, 7) ist jeweils eine Armierung in Form einer Fasermatte (19, 21) eingebettet; wobei
3. die Komponenten im Bereich der folgenden Massenanteile (bezogen auf die Gesamtmasse der Bauplatte) liegen:
3.1 Bindemittel im Bereich von 10 bis 40 Masse-%;
3.2 hydrophobierter expandierter Perlit (15) im Bereich von 3 bis 30 Masse-%;
3.3 inerter Füllstoff (17) im Bereich von 10 bis 70 Masse-%.

2. Bauplatte nach Anspruch 1, bei der die Körner aus expandiertem Perlit (15) eine Korngröße im Bereich von größer 0 mm bis 6 mm aufweisen.

3. Bauplatte nach Anspruch 1, bei der die Körner aus expandiertem Perlit (15) eine Korngröße im Bereich von 0,1 mm bis 3 mm aufweisen.

4. Bauplatte nach Anspruch 1 mit einer Trockenrohdichte des hydrohpobierten expandierten Perlit (15) I.M. Bereich von 50 bis 150 km³ und einer Trockenrohdichte des inerten Füllstoffes (17) I.M. Bereich von 150 bis 1500 kg/m³.

## Claims

1. A construction panel (1), in particular for use in dry construction, comprising the following features:
1. a core (3) comprising the following features:
1.1 a matrix (13) from a set, inorganic binder in the form of Portland cement;
1.2 grains from expanded perlite (15) are embedded in the binder matrix (13);
1.3 hydrophobizing (16) in the form of silicon oil is applied on the grains of expanded perlite (15);
1.4 an inert filler (17) in the form of limestone flour is embedded in the binder matrix (13);
1.5 the inert filler (17) has a dry bulk density which is higher than the dry bulk density of the hydrophobized expanded perlite (15);
2. two cover layers (5, 7) comprising the following features:
2.1 the cover layers (5, 7) cover the core (3) from the outside and form the two main surfaces (9, 11) of the construction panel (1);
2.2 the cover layers (5, 7) consist of a set Portland cement slurry;
2.3 reinforcement in the form of a fiber mat (19, 21) is embedded in each of the cover layers (5, 7); wherein
3. the components lie in the range of the following mass proportions (related to the total mass of the construction panel):
3.1 binder in the range of 10 to 40 % by mass;
3.2 hydrophobized expanded perlite (15) in the range of 3 to 30 % by mass;
3.3 inert filler (17) in the range of 10 to 70 % by mass.

2. The construction panel according to claim 1, in which the grains of expanded perlite (15) have a grain size in the range of greater than 0 mm to 6 mm.

3. The construction panel according to claim 1, in which the grains of expanded perlite (15) have a grain size in the range of 0.1 mm to 3 mm.

4. The construction panel according to claim 1 comprising a dry bulk density of the hydrophobized expanded perlite (15) in the range of 50 to 150 kg/m³ and a dry bulk density of the inert filler (17) in the range of 150 to 1500 kg/m³.

## Revendications

1. Plaque de construction (1), en particulier pour une utilisation dans une construction sèche, avec les caractéristiques suivantes :
1. un noyau (3) avec les caractéristiques suivantes:
1.1 une matrice (13) constituée d'un agent liant anorganique, sous la forme de ciment de Portland durci;
1.2 des grains de perlite expansée (15) sont enrobés dans la matrice de liant (13);
1.3 une couche hydrofuge (16) sous la forme d'une huile de silicone a été appliquée sur les grains de perlite expansée (15);
1.4 un agent de charge inerte (17) sous la forme de poudre de calcaire a été incorporé dans la matrice de liant (13);
1.5 l'agent de charge inerte (17) présente une masse volumique apparente sèche supérieure à la masse volumique apparente sèche de la perlite expansée hydrofugée (15);
2. deux couches de revêtement (5, 7) avec les caractéristiques suivantes:
2.1 les couches de revêtement (5, 7) isolent le noyau (3) de l'extérieur et forment les deux surfaces principales (9, 11) de la plaque de construction (1);
2.2 les couches de revêtement (5, 7) sont constituées d'un enduit de ciment de Portland durci;
2.3 une armature sous la forme d'un tapis de fibres (19, 21) est incorporée dans chacune des couches de revêtement (5, 7);
3. les composants sont présents selon les parts en masse suivantes (liées à la masse totale de la plaque de construction):
3.1 agent liant de 10 à 40% en masse ;
3.2 perlite expansée hydrofugée (15) de 3 à 30% en masse ;
3.3 agent de charge inerte (17) de 10 à 70% en masse.

2. Plaque de construction selon la revendication 1, dans laquelle les grains de perlite expansée (15) présente une taille de grain allant de plus de 0 mm à 6 mm.

3. Plaque de construction selon la revendication 1, dans laquelle les grains de perlite expansée (15) présente une taille de grain allant de 0,1 mm à 3 mm.

4. Plaque de construction selon la revendication 1, dans laquelle la masse volumique apparente sèche de la perlite expansée hydrofugée (15) varie entre 50 et 150 kg/m³, et la masse volumique apparente sèche de l'agent de charge inerte (17) varie entre 150 et 1500 kg/m³.
